# EUROPÄISCHE PATENTSCHRIFT

(11) **EP 1 486 728 B1**
(45) Veröffentlichungstag und Bekanntmachung des Hinweises auf die Patenterteilung: **04.09.2013**
(21) Anmeldenummer: 04012672.4
(22) Anmeldetag: 28.05.2004
(51) Int. Cl.: F23D 14/66, F23L 15/04

(54) **Rekuperatorbrenner und Rekuperator hierzu**
Recuperative burner and recuperator
Brûleur à récupération et récupérateur

(30) Priorität: 12.06.2003 DE 10326951
(43) Veröffentlichungstag der Anmeldung: 15.12.2004
(73) Patentinhaber: NOXMAT GmbH, 09569 Oederan (DE)
(72) Erfinder: Harbeck, Wolfgang, 09573 Leubsdorf (DE); Riehl, Ingo, 09599 Freiberg (DE); Weiss, Karl, 71691 Freiberg (DE)
(74) Vertreter: Gahlert, Stefan

(56) Entgegenhaltungen:
- EP-A1- 1 422 473
- EP-A2- 0 773 407
- DE-A1- 1 551 761
- DE-A1- 4 011 190

## Beschreibung

Die Erfindung betrifft einen keramischen Rekuperator für einen Rekuperatorbrenner, mit einem Rohrabschnitt, dessen Innenoberfläche und dessen Außenoberfläche als Wärmeaustauschfläche mit strömenden Fluiden dient und eine Mehrzahl von Oberflächenelementen aufweist.

Die Erfindung betrifft ferner einen Rekuperatorbrenner mit einem Brennerkopf, an dem ein Brennrohr, das in eine Brennkammer mündet, und ein zum Brennrohr koaxiales Abgasführungsrohr aufgenommen ist, wobei zwischen Brennrohr und Abgasführungsrohr ein derartiger keramischer Rekuperator angeordnet ist.

Ein Rekuperatorbrenner mit einem keramischen Rekuperator ist aus der DE 40 11 190 A1 bekannt.

Bei Rekuperatorbrennern wird durch einen Wärmeaustausch zwischen der Brennerzuluft und dem Abgasstrom des Brenners der Wirkungsgrad erhöht. Hierzu dient der Rekuperator, der zwischen diesen beiden Gasströmen einen Wärmeaustausch vornimmt. Bei dem Rekuperatorbrenner gemäß der eingangs genannten Art besteht der Rekuperator aus keramischem Material und weist zur Erhöhung der Wärmeaustauschfläche Falten auf, die sich in Längsrichtung des Rekuperators erstrecken.

Zwecks einer weiteren Verbesserung der Wärmeübertragung wird gemäß der EP 0 803 696 A2 ein Rekuperator verwendet, dessen Wärmeaustauschfläche durch Noppen vergrößert ist.

Aus der EP 0 773 407 A2 ist ein keramischer Rekuperator gemäß dem Oberbegriff von Anspruch 1 bekannt.

Bei dem bekannten Rekuperator werden zur Vergrößerung der Wärmeaustauschfläche Vorsprünge und Vertiefungen verwendet, die in einer bestimmten Weise orientiert sind.

Insgesamt lässt sich mit derartigen Rekuperatoren eine wirkungsvolle Wärmeübertragung gewährleisten. Solche Rekuperatoren bestehen wegen der hohen thermischen Belastung meist aus keramischem Material. Wegen der kompliziert geformten Oberfläche ist eine Herstellung im Gussverfahren, insbesondere im Schlickergussverfahren bevorzugt.

Als problematisch erweist sich hierbei jedoch die Erzeugung von fein strukturierten Oberflächen, wie sie für die bekannten Rekuperatoren notwendig ist. Fein strukturierte Außenwände werden mehr oder weniger verrundet und verlieren die gewünschte Feinstruktur.

Der Erfindung liegt damit die Aufgabe zugrunde, einen Rekuperator und einen Rekuperatorbrenner mit einem solchen zu schaffen, womit einerseits eine gute Wärmeübertragung gewährleistet werden kann und andererseits eine einfache, präzise und kostengünstige Herstellung ermöglichst ist.

Diese Aufgabe wird durch einen Rekuperator gemäß Anspruch 1 gelöst.

Die Aufgabe der Erfindung wird ferner durch einen Rekuperatorbrenner mit einem Brennerkopf gelöst, an dem ein Brennrohr, das in eine Brennkammer mündet, und ein zum Brennrohr koaxiales Abgasführungsrohr aufgenommen sind, wobei zwischen Brennrohr und Abgasführungsrohr ein keramischer Rekuperator gemäß Anspruch 1 angeordnet ist.

Die Aufgabe der Erfindung wird auf diese Weise vollkommen gelöst.

Der erfindungsgemäße Rekuperator weist eine große Wärmeaustauschfläche für die Wärme übertragenden Fluide auf. Die äußere Form des Rekuperators ist einfach ausgebildet und findet sich demzufolge annähernd als innere Form an der Innenwand wieder. Die Herstellung in einem Gussverfahren, insbesondere einem Schlickergussverfahren, wird auf diese Weise besonders begünstigt, wobei eine präzise Ausbildung der gewünschten Oberfläche, gewährleistet ist. Durch die spiralförmige Ausbildung der Falten an dem als Wärmeaustauschfläche dienenden Rohrabschnitt des Rekuperators wird der Strömungsweg der Wärme übertragenden Medien vergrößert, wodurch der Wirkungsgrad verbessert wird.

Die Falten sind erfindungs gemäß stetig gekrümmt, insbesondere wellenförmig ausgebildet.

Auf diese Weise kann eine einfache Herstellung gleichzeitig mit einer großen Wärmeaustauschfläche gewährleistet werden.

In weiter vorteilhafter Ausgestaltung der Erfindung ist der Rohrabschnitt zum Zusammenwirken mit einem Außenrohr eines Rekuperatorbrenners zur Bildung eines Außenraums und zum Zusammenwirken mit einem Innenrohr des Rekuperatorbrenners zur Bildung eines Innenraums zur Führung von Fluiden ausgebildet, wobei zumindest zwischen dem Außenrohr und den Falten oder zwischen dem Innenrohr und den Falten ein Spalt verbleibt.

Der Spalt, der sowohl zwischen Außenrohr und Falten als auch zwischen Innenrohr und Falten ausgebildet ist, beträgt mindestens das 0,3-fache der Wandstärke des Rohrabschnitts, vorzugsweise etwa die Hälfte der Wandstärke des Rohrabschnittes.

Durch diese Maßnahmen wird eine verstärkte Turbulenz bewirkt, wodurch der Wärmeaustausch verbessert werden. Am Einströmen der Falten von den Fluiden strömt ein Teil der Medien in den Wellentälern entlang, ein anderer strömt über die Wellenberge durch den verbleibenden Spalt zwischen Rekuperator und Außen-rohr bzw. Innenrohr, also durch die jeweiligen Einschnürungen, die sich an den Bergen ergeben. Hinter den Bergen kommt es zu Querschnittserweiterungen und demzufolge zur Ablösung der Strömung und zur Erzeugung von Sekundärströmungen. Dieser Anteil vermischt sich mit dem Teil der Strömung, der im nächsten Wellental anzutreffen ist. Auf diese Weise wird eine Grenzschichtausbildung merklich verhindert und der Wirkungsgrad des Wärmeaustausches erheblich verbessert.

Gemäß einem weiteren Merkmal der Erfindung bilden die Falten mit der Längsachse des Rekuperators einen Steigungswinkel α, der vorzugsweise zwischen 5° und 85°, insbesondere zwischen 30° und 80° liegt.

Mit einem derartigen Steigungswinkel kann je nach der Strömungsgeschwindigkeit der strömenden Fluide ein optimierter Wärmeübergang erreicht werden. Es versteht sich hierbei, dass die Spirale sich entweder im Uhrzeigersinn oder im Gegenuhrzeigersinn mit einem derartigen Steigungswinkel erstrecken kann.

In weiter bevorzugter Ausgestaltung der Erfindung weisen die Falten von einem Wellenberg zu einem benachbarten Wellenberg einen Abstand L auf, der mindestens das Zweifache der Wandstärke d des Rohrabschnittes, vorzugsweise etwa das Vierfache der Wandstärke d beträgt.

Ferner ist vorzugsweise die durch eine Differenz der Radien zwischen einem die Außenoberfläche der Falten berührenden Kreis und einem die Innenoberfläche der Falten berührenden Kreis definierte Amplitude A größer als die Wandstärke des Rohrabschnittes und beträgt vorzugsweise etwa das 2,5-fache der Wandstärke d.

Auf diese Weise kann durch Ausgestaltung der Faltenform die Faltenanzahl bestimmt und in deren Abhängigkeit eine optimierte Wärmeübertragung erreicht werden.

In weiter bevorzugter Ausgestaltung der Erfindung ist bei einem mittleren Umfang des Rohrabschnitts von etwa 100 mm mindestens 1 Falte vorgesehen, vorzugsweise mindestens 2 Falten, besonders bevorzugt mindestens 5 Falten. Dabei erhöht sich bei einer Vergrößerung des mittleren Durchmessers die Faltenzahl entsprechend.

Auf diese Weise kann durch Anpassung der Faltenanzahl und des Verdrehwinkels der Falten in Abhängigkeit vom Umfang des Rekuperators eine optimierte Wärmeübertragung erreicht werden.

Der Rekuperator besteht vorzugsweise aus einer SiC-Keramik.

Wie bereits erwähnt, ist der Rekuperator vorzugsweise als Gussteil ausgebildet und besonders bevorzugt als Schlickergussteil hergestellt.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: einen Längsschnitt durch einen erfindungsgemäßen Rekuperatorbrenner in vereinfachter Darstellung;
- Fig. 2: eine perspektivische Ansicht des erfindungsgemäßen Rekuperators gemäß Fig. 1;
- Fig. 3: einen Längsschnitt durch den Rekuperator gemäß Fig. 2 in vergrößerter Darstellung;
- Fig. 4: einen Querschnitt durch den Rekuperator gemäß Fig. 3;
- Fig. 5: einen Querschnitt durch einen Faltenabschnitt und
- Fig. 6: eine vereinfachte Darstellung des Rekuperators zur Definition des Steigungswinkels α.

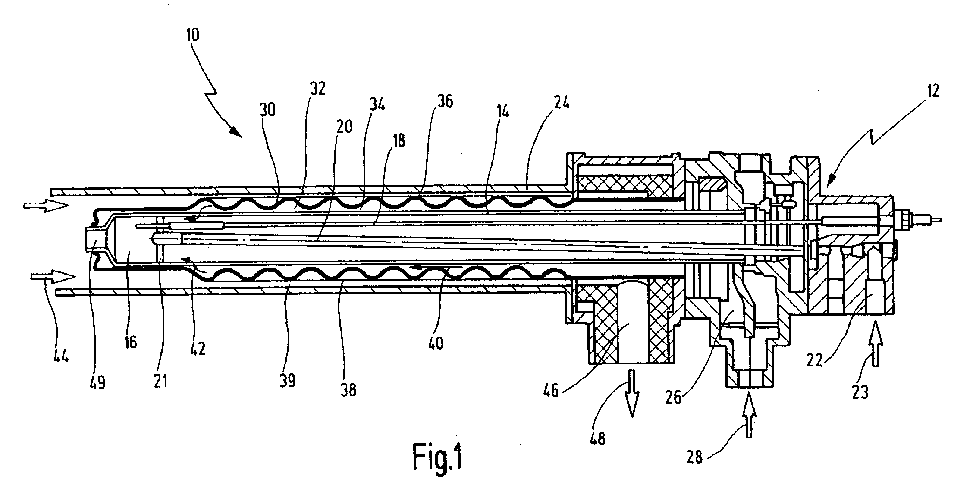

In Fig. 1 ist ein erfindungsgemäßer Rekuperatorbrenner im Längsschnitt dargestellt und insgesamt mit der Ziffer 10 bezeichnet.

Der Rekuperatorbrenner 10 weist einen Brennerkopf 12 auf, an dem ein Luftleitrohr, das sogenannte Brennrohr 14, an einem Ende gehalten ist. Das Brennrohr 14 mündet in eine Brennkammer 16. Koaxial zu dem Brennrohr 14 ist ein Außenrohr oder Abgasführungsrohr 24 am Brennerkopf 12 gehalten. Zwischen dem Brennrohr 14 und dem Abgasführungsrohr 24 ist ein Rekuperator 30 gehalten.

Über einen seitlichen Kanal 26 wird Verbrennungsluft über den Brennerkopf 12 hinzugeführt, wie durch den Pfeil 28 angedeutet ist, und gelangt in einen zwischen dem Brennrohr 14 und dem Rekuperator definierten Innenraum 32, nach dessen Durchströmung über nicht dargestellte Durchtrittsöffnungen des Brennrohrs 14 schließlich in die Brennkammer 16. Über einen Kanal 22 im Brennerkopf 12 wird Brennstoff in eine Gaslanze 20 zugeführt, wie durch den Pfeil 23 angedeutet ist, und gelangt über eine Drallplatte 21 in die Brennkammer 16. Ferner ist zur Zündung des Brennstoff/Luft-Gemisches eine Zündelektrode 18 vorgesehen, die mit ihrem freien Ende gleichfalls in die Brennkammer 16 hineinragt.

Zwischen dem Rekuperator 30 und dem Abgasführungsrohr 24 ist ein Außenraum 38 gebildet. Wie durch die Pfeile 44 angedeutet strömen Verbrennungsgase oder Rauchgase durch den Außenraum 38 in den Abgaskanal 46 des Brennerkopfes 12 und erhitzen auf diese Weise den Rekuperator 30. Die über den Kanal 26 zugeführte Verbrennungsluft strömt in entgegengesetzter Richtung in den Innenraum zwischen Rekuperator 30 und Brennrohr 14, wie durch die Pfeile 40 angedeutet ist. Auf diese Weise findet ein Wärmeaustausch zwischen den im Außenraum 38 strömenden Verbrennungsgasen und der im Innenraum 32 strömenden Verbrennungsluft nach dem Gegenstromprinzip statt.

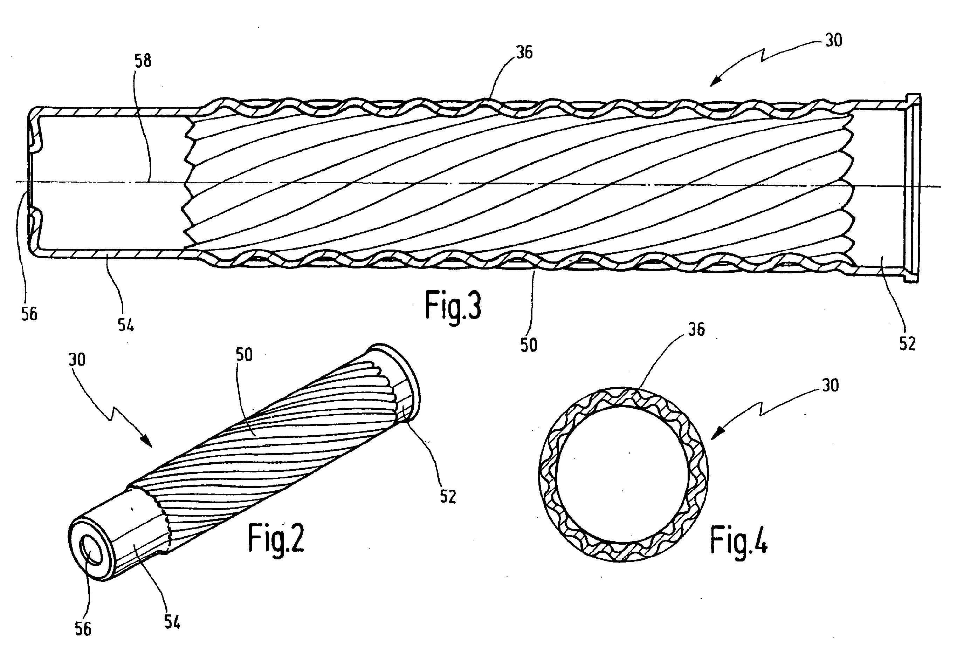

Wie aus den Figuren 2 bis 6 näher ersichtlich, weist der Rekuperator 30 einen als Wärmeaustauschfläche dienenden Rohrabschnitt 50 auf, an dem eine Mehrzahl von Falten 36 vorgesehen ist, die sich spiralförmig zur Längsachse 58 des Rekuperators erstrecken. Der Rohrabschnitt 50, der etwa drei Viertel der Länge des Rekuperators 30 einnimmt, ist an seinem zum Brennerkopf 12 weisenden Ende von einem hohlzylindrischen Abschnitt 52 mit Bund eingeschlossen und am gegenüberliegenden Ende gleichfalls von einem hohlzylindrischen Abschnitt 54 eingeschlossen, der sich am freien Ende verjüngt und in dem eine Öffnung 56 vorgesehen ist. Diese Öffnung 56 ist so bemessen, dass sie das Brennrohr 14 mit dessen Austrittsende 49 für die Flammengase aufnehmen kann.

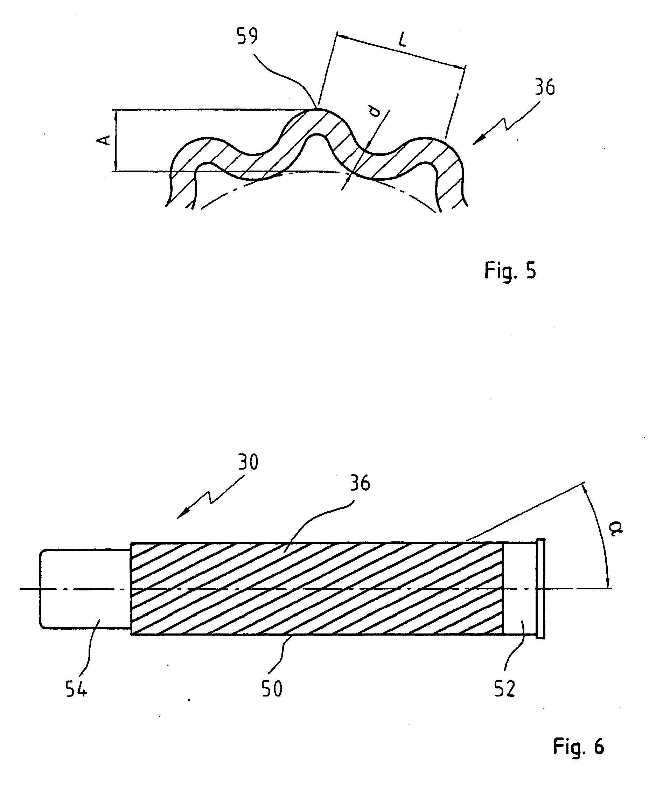

Wie insbesondere aus Fig. 4 und 5 ersichtlich ist, sind die Falten 36 wellenförmig ausgebildet, so dass sich sowohl an der Innenoberfläche als auch an der Außenoberfläche des Rekuperators 30 abwechselnd Täler und Berge ergeben.

Der Rekuperator 30 besteht aus Keramik, beispielsweise aus einer SiC-Keramik und ist vorzugsweise im Schlickergussverfahren hergestellt.

Die Falten 36 sind spiralförmig so ausgebildet, dass sie über eine Länge des Rohrabschnitts 50 von beispielsweise 400 mm um 180° verdreht sind, was einem Steigungswinkel α von 65° entspricht.

Die Anzahl der Falten 36 und der Steigungswinkel α hängen vom Abstand L zwischen benachbarten Wellenbergen 59 und der Amplitude A (vgl. Fig. 5) sowie vom jeweiligen Anwendungsfall ab, insbesondere von der Strömungsgeschwindigkeit der Fluide, also der Verbrennungsluft und der Abgase.

Bei einem mittleren Rekuperatordurchmesser von etwa 120 mm können beispielsweise 21 Falten vorgesehen sein. Dabei könnte der Faltenabstand L beispielsweise 24 mm betragen, bei einer Amplitude A von 13 mm und bei einer Wandstärke d von 6 mm.

Im Betrieb strömen heiße Flammengase aus der Brennkammer 16 über deren Austrittsöffnung 49 aus. Vom brennerkopfseitigen Ende strömt Verbrennungsluft in die spiralförmig angeordneten Falten 36 des Innenraums 32 ein, während gleichzeitig Rauchgase vom äußeren Ende her in die spiralförmigen Falten 36 des Außenraums 38 einströmen. Dabei bewirkt die spiralförmige Anordnung einen verlängerten Strömungsweg entlang des Rekuperators 30. Zusätzlich strömen Teile der Verbrennungsluft auf der Innenseite und Rauchgase auf der Außenseite ständig gegen die ausgebildeten Falten. Ein Teil der Medien strömt jeweils durch die Spalten 34 bzw. 39 zwischen Falten 36 und Brennrohr 14 bzw. Abgasführungsrohr 24. Es kommt somit zur Ausbildung von Sekundärströmungen durch die Vermischung zwischen den entlang der spiralförmig ausgebildeten Falten 36 strömenden Medien und den durch die Spalte 34 bzw. 39 überströmenden Medien. Hierzu können die Spalte 34 bzw. 39 beispielsweise mit etwa der Hälfte der Wandstärke des Rohrabschnittes 50 ausgebildet sein, im vorliegenden Fall also mit etwa 3 mm bemessen sein. Es ergibt sich so eine gute Vermischung der strömenden Medien und die Erzeugung von Turbulenzen, so dass eine Ausbildung stabiler Grenzschichten erschwert bzw. weitestgehend vermieden wird und es zu einem intensiven Wärmekontakt mit den Oberflächen des Rohrabschnitts 50 kommt.

Auf diese Weise ergibt sich ein sehr guter Wärmeaustausch zwischen Rauchgasen und Verbrennungsluft.

Infolge der geometrisch einfachen Form des Rekuperators 30 lässt sich dieser mit hoher Präzision im Schlickergussverfahren herstellen.

## Patentansprüche

1. Keramischer Rekuperator für einen Rekuperatorbrenner (10), mit einem Rohrabschnitt (50), der als Wärmeaustauschfläche mit strömenden Fluiden dient und eine Mehrzahl von Falten (36) aufweist, wobei die Falten (36) spiralförmig zur Längsachse (58) des Rekuperators (30) verlaufen, **dadurch gekennzeichnet, dass** die Falten (36) stetig gekrümmt sind, insbesondere wellenförmig ausgebildet sind.

2. Keramischer Rekuperator nach Anspruch 1 , **dadurch gekennzeichnet, dass** der Rohrabschnitt (50) zum Zusammenwirken mit einem Außenrohr (24) eines Rekuperatorbrenners zur Bildung eines Außenraums (38) und zum Zusammenwirken mit einem Innenrohr (14) des Rekuperatorbrenners zur Bildung eines Innenraums (32) zur Führung von Fluiden ausgebildet ist, wobei zumindest zwischen dem Außenrohr (24) und den Falten (36) oder zwischen dem Innenrohr (14) und den Falten (36) ein Spalt (34, 39) verbleibt.

3. Keramischer Rekuperator nach Anspruch 2, **dadurch gekennzeichnet, dass** der Spalt (34, 39), der sowohl zwischen Außenrohr (24) und Falten (36) als auch zwischen Innenrohr (14) und Falten (36) ausgebildet ist, mindestens das 0,3-fache der Wandstärke (d) des Rohrabschnitts (50) beträgt, vorzugsweise etwa die Hälfte der Wandstärke (d) des Rohrabschnittes (50) beträgt.

4. Keramischer Rekuperator nach einem der vorhergehenden Ansprüche, **dadurch gekennzeichnet, dass** die Falten (36) mit der Längsachse (58) des Rekuperators (30) einen Steigungswinkel (E) bilden, der vorzugsweise zwischen 5° und 85°, besonders bevorzugt zwischen 30° und 80° liegt.

5. Keramischer Rekuperator nach einem der vorhergehenden Ansprüche, **dadurch gekennzeichnet, dass** die Falten (36) von einem Wellenberg (59) zu einem benachbarten Wellenberg (59) einen Abstand (L) aufweisen, der mindestens das Zweifache der Wandstärke (d) des Rohrabschnittes (50), vorzugsweise etwa das Vierfache der Wandstärke (d) beträgt.

6. Keramischer Rekuperator nach einem der vorhergehenden Ansprüche, **dadurch gekennzeichnet, dass** die durch eine Differenz der Radien zwischen einem die Außenoberfläche der Falten berührenden Kreis und einem die Innenoberfläche der Falten berührenden Kreis definierte Amplitude (A) größer als die Wandstärke des Rohrabschnittes (50) ist.

7. Keramischer Rekuperator nach Anspruch 6, **dadurch gekennzeichnet, dass** die Amplitude (A) mindestens das Zweifache der Wandstärke (d) beträgt, vorzugsweise etwa das 2,5-fache der Wandstärke (d) beträgt.

8. Keramischer Rekuperator nach einem der vorhergehenden Ansprüche, **dadurch gekennzeichnet, dass** je etwa 100 Millimeter mittleren Umfangs des Rohrabschnittes (50) mindestens 1 Falte (36) vorgesehen ist, vorzugsweise mindestens 2 Falten (36), besonders bevorzugt mindestens 5 Falten (36).

9. Keramischer Rekuperator nach einem der vorhergehenden Ansprüche, **dadurch gekennzeichnet, dass** der Rekuperator (30) aus einer SiC-Keramik besteht.

10. Keramischer Rekuperator nach einem der vorhergehenden Ansprüche, **dadurch gekennzeichnet, dass** der Rekuperator (30) als Gussteil, insbesondere als Schlickergussteil ausgebildet ist.

11. Rekuperatorbrenner mit einem Brennerkopf (12), an dem ein Brennrohr (14), das in eine Brennkammer (16) mündet, und ein zum Brennrohr (14) koaxiales Abgasführungsrohr (24) aufgenommen sind, wobei zwischen Brennrohr (14) und Abgasführungsrohr (24) ein keramischer Rekuperator (30) nach einem der vorhergehenden Ansprüche angeordnet ist.

## Claims

1. A ceramic recuperator for a recuperator burner (10), comprising a tube section (50) serving as a heat exchanging surface with flowing fluids and having a plurality of pleats (36), wherein the pleats (36) are spirally wound about the longitudinal axis (58) of the recuperator, **characterized in that** the pleats (36) are bent gradually, in particular, are undulated.

2. The ceramic recuperator of claim 1, **characterized in that** the tube section (50) together with an outer tube (24) of a recuperator burner is configured for defining an outer space (38) for cooperation with an inner tube (14) of the recuperator burner for defining an inner space (32) for guiding fluids, wherein there remains a gap (34, 39) at least between the outer tube (24) and the pleats (36) or between the inner tube (14) and the pleats (36).

3. The ceramic recuperator of claim 2, **characterized in that** the gap (34, 39) between the outer tube (24) and the pleats (36) as well as between the inner tube (14) and the pleats (36) is at least 0.3 times the wall thickness (d) of the tube section (50), preferably about half the wall thickness of the tube section (50).

4. The ceramic recuperator of any of the preceding claims, **characterized in that** the pleats (36) with respect to the longitudinal axis (58) of the recuperator (30) form a helix angle (α) that is between 5° and 85°, preferably between 30° and 80°.

5. The ceramic recuperator of any of the preceding claims, **characterized in that** the pleats (36) have a distance (L) between a wave crest (59) and an adjacent wave crest (59) that is at least twice the wall thickness (d) of the tube section (50), preferably about for times the wall thickness (d).

6. The ceramic recuperator of any of the preceding claims, **characterized in that** the amplitude (A) defined by a difference between the radii of a circle touching the outer surface of the pleats and a circle touching the inner surface of the pleats is larger than the wall thickness of said tube section (50).

7. The ceramic recuperator of claim 6, **characterized in that** said amplitude (A) is at least twice the wall thickness (d), preferably about 2.5 times the wall thickness (d).

8. The ceramic recuperator of any of the preceding claims, **characterized in that** per about 100 millimeters of an average circumference of the tube section (50), there is/are provided at least one pleat (36), preferably at least two pleats (36), particularly preferred at least 5 pleats (36).

9. The ceramic recuperator of any of the preceding claims, **characterized in that** the recuperator is made of a SiC ceramic.

10. The ceramic recuperator of any of the preceding claims, **characterized in that** the recuperator is configured as a cast part, in particular as a slip cast part.

11. A recuperator burner comprising a burner head (12) whereon a burner tube (14) yielding into a burner chamber (16) and an exhaust gas guide tube (24) being coaxial to said burner tube (14) are received, wherein between said burner tube (14) and said exhaust gas guide tube (24) a ceramic recuperator according to any of the preceding claims is located.

## Revendications

1. Récupérateur céramique pour un brûleur à récupération (10), comprenant une section tubulaire (50) qui sert de surface d'échange thermique avec des fluides en écoulement et comprend une pluralité de plis (36), les plis (36) s'étendant en forme de spirale par rapport à l'axe longitudinal (58) du récupérateur (30), **caractérisé en ce que** les plis (36) présentent une courbure constante, en particulier sont réalisés de manière ondulée.

2. Récupérateur céramique selon la revendication 1, **caractérisé en ce que** la section tubulaire (50) est réalisée pour coopérer avec un tube extérieur (24) d'un brûleur à récupération en vue de la formation d'un espace extérieur (38) et pour coopérer avec un tube intérieur (14) du brûleur à récupération en vue de la formation d'un espace intérieur (32) pour le guidage de fluides, un interstice (34, 39) demeurant au moins entre le tube extérieur (24) et les plis (36) ou entre le tube intérieur (14) et les plis (36).

3. Récupérateur céramique selon la revendication 2, **caractérisé en ce que** l'interstice (34, 39) qui est réalisé non seulement entre le tube extérieur (24) et les plis (36) mais encore entre le tube intérieur (14) et les plis (36) représente au moins 0,3 fois l'épaisseur de paroi (d) de la section tubulaire (50), de préférence approximativement la moitié de l'épaisseur de paroi (d) de la section tubulaire (50).

4. Récupérateur céramique selon l'une quelconque des revendications précédentes, **caractérisé en ce que** les plis (36) forment avec l'axe longitudinal (58) du récupérateur (30) un angle d'inclinaison (E) qui se situe de préférence entre 5° et 85°, de manière particulièrement préférée entre 30° et 80°.

5. Récupérateur céramique selon l'une quelconque des revendications précédentes, **caractérisé en ce que** les plis (36) présentent, d'un sommet d'ondulation (59) à un sommet d'ondulation adjacent (59), un espacement (L) qui représente au moins deux fois l'épaisseur de paroi (d) de la section tubulaire (50), de préférence approximativement quatre fois l'épaisseur de paroi (d).

6. Récupérateur céramique selon l'une quelconque des revendications précédentes, **caractérisé en ce que** l'amplitude (A) définie par une différence de rayons entre un cercle en contact avec la surface extérieure des plis et un cercle en contact avec la surface intérieure des plis est supérieure à l'épaisseur de paroi de la section tubulaire (50).

7. Récupérateur céramique selon la revendication 6, **caractérisé en ce que** l'amplitude (A) représente au moins deux fois l'épaisseur de paroi (d), de préférence approximativement 2,5 fois l'épaisseur de paroi (d).

8. Récupérateur céramique selon l'une quelconque des revendications précédentes, **caractérisé en ce qu'**au moins 1 pli (36), de préférence au moins 2 plis (36), de manière particulièrement préférée au moins 5 plis (36), sont prévus pour approximativement 100 millimètres de circonférence centrale de la section tubulaire (50).

9. Récupérateur céramique selon l'une quelconque des revendications précédentes, **caractérisé en ce que** le récupérateur (30) est constitué d'une céramique SiC.

10. Récupérateur céramique selon l'une quelconque des revendications précédentes, **caractérisé en ce que** le récupérateur (30) est réalisé sous forme de pièce coulée, en particulier sous forme de pièce coulée en barbotine.

11. Brûleur à récupération comprenant une tête de brûleur (12) au niveau de laquelle sont reçus un tube de combustion (14) qui débouche dans une chambre de combustion (16) et un tube de guidage des gaz brûlés (24) coaxial au tube de combustion (14), un récupérateur céramique (30) selon l'une quelconque des revendications précédentes étant disposé entre le tube de combustion (14) et le tube de guidage des gaz brûlés (24).
